# EUROPEAN PATENT APPLICATION

(11) **EP 4 350 185 A1**
(43) Date of publication of application: **10.04.2024**
(21) Application number: 22425046.4
(22) Date of filing: 04.10.2022
(51) Int. Cl.: F16K 17/30, F16K 17/04, F16K 31/06, B64C 11/38, B64C 13/40, B64C 27/64

(54) **VALVE ASSEMBLY**

(71) Applicant: Microtecnica S.r.l., 10126 Turin (IT)
(72) Inventor: Mezzino, Giacomo, 10126 Torino (TO) (IT); Salvatoriello, Gianfranco, 10126 Torino (TO) (IT)
(74) Representative: Dehns

(57) **Abstract**

A valve assembly for an aircraft fluid system comprises: a pressure relief valve comprising a blocking member and a pressure relief passage, the blocking member configured to restrict a fluid flow in the pressure relief passage when the pressure relief valve is in a closed configuration, wherein the pressure relief passage is connectable to a fluid passage of the aircraft fluid system to permit pressure relief of the aircraft fluid system when the pressure relief valve is in an open configuration; and an actuator operable in a first configuration and a second configuration; wherein when the actuator is in the first configuration, the actuator is configured to apply an actuation force to the blocking member which forces the pressure relief valve towards the closed configuration; and when the actuator is in the second configuration, the actuation force applied to the blocking member is reduced such that the pressure relief valve is openable to permit pressure relief of the fluid system.

## Description

### FIELD OF THE INVENTION

The present invention relates to the field of valve assemblies such as those which may be used in aircraft fluid systems. The valve assembly may also have other uses.

### BACKGROUND

A valve assembly may include a pressure relief valve which is used to regulate the output pressure on an aircraft fluid system. The valve assembly may operate on high temperature fluid lines. In some circumstances, it may be desired to place the pressure relief valve into a closed configuration in order to maintain the safety of the aircraft. There remains scope for improvements in providing such valve assemblies.

### SUMMARY

In a first aspect, there is provided a valve assembly for an aircraft fluid system, the valve assembly comprising a pressure relief valve and an actuator. The pressure relief valve comprises a blocking member and a pressure relief passage. The blocking member is configured to restrict a fluid flow in the pressure relief passage when the pressure relief valve is in a closed configuration. The pressure relief passage is connectable to a fluid passage of the aircraft fluid system to permit pressure relief of the aircraft fluid system when the pressure relief valve is in an open configuration. The actuator is operable in a first configuration and a second configuration; wherein when the actuator is in the first configuration, the actuator is configured to apply an actuation force to the blocking member which forces the pressure relief valve towards the closed configuration; and when the actuator is in the second configuration, the actuation force applied to the blocking member is reduced such that the pressure relief valve is openable to permit pressure relief of the fluid system.

By using the actuator of the valve assembly to apply a force to the blocking member, a simplified assembly for preventing opening of the pressure relief valve may be provided. This may allow the valve assembly to be more lightweight, which is particularly advantageous for aircraft applications. Moreover, the simplicity of the design enables the actuator and pressure relief valve to be a single Line-Replaceable Unit (LRU), which facilitates easier servicing or replacement of the valve assembly. Furthermore, because only one pressure relief passage is used, a minimum number of seals is used which improves reliability.

In some examples the blocking member is configured to receive a pressure relief force from fluid in the pressure relief passage, the pressure relief force acting against the actuation force. Applying the actuation force against the pressure relief force can improve the efficiency of closing the pressure relief valve.

In some examples the pressure relief valve further comprises a biasing member which is configured to apply a biasing force to the blocking member, the biasing force applied in the same direction as the actuation force. The biasing member may be a spring. The biasing force moves the blocking member into the pressure relief passage to close the pressure relief valve when the actuator is in the second configuration and pressure relief is not required.

In some examples, when the actuator is in the second configuration the actuation force is reduced such that the position of the blocking member is determined substantially by the result of the biasing force and the pressure relief force. The blocking member will therefore move to a position to allow pressure relief which is proportional to the pressure relief force. The biasing member may be sized and determined to provide effective pressure relief in various pressure conditions.

In some examples the actuation force is greater than the biasing force subtracted from a maximum pressure relief force. The maximum pressure relief force may be the force applied to the blocking member under a maximum pressure condition in the fluid system. The actuation force will be able to close the pressure relief valve and minimise any loss of pressure in the pressure relief passage even in a maximum pressure condition.

In some examples the actuator is in the second configuration when the actuator is supplied with electrical power. In some examples the actuator is in the first configuration when the actuator is not supplied with electrical power. This advantageously ensures that the actuation force will be applied to the blocking member in a scenario where there is no power to the actuator. This is advantageous in a scenario where, for example, it is needed for the pressure relief valve to be closed in the event of a loss of power.

In some examples the valve assembly comprises a controller configured to control the actuator to be in the first configuration or the second configuration. In some examples the controller is configured to selectively supply electrical power to the actuator to control the actuator to be in the first configuration or the second configuration. A controller can provide an effective means of controlling the actuator in the first or second configuration. A controller can, for example, receive a piloting command to control the selection of the first or second configurations. The use of electrical power to control the actuator to be in the first or second configuration is particularly advantageous for More Electric Aircraft (MEA), wherein the majority of systems may be powered and controlled electronically.

In some examples the actuator is mechanically fixed to the pressure relief valve. By fixing the actuator to the pressure relief valve, a more compact arrangement can be achieved which is particularly advantages in aircraft applications, where space is particularly limited.

In some examples the actuator includes a mechanical member, and the mechanical member is in an extended configuration to apply the actuation force to the blocking member when the actuator is in the first configuration, and the mechanical member is in a retracted configuration when the actuator is in the second configuration. Using a mechanical member is an effective way of transferring the force from the actuator to the blocking member. The mechanical member can be dimensioned and sized to transfer the force from the actuator to the blocking member without interfering with other mechanical parts in the pressure relief valve.

In some examples the actuator is aligned with the blocking member on a common axis. This can prevent the need for any additional parts such as cams or pivots to transfer the force from the actuator to the blocking member, which results in a more compact arrangement.

In some examples the actuator is a solenoid. In some examples the solenoid includes one or more coils configured to provide an electromagnetic force when the solenoid is in the second configuration, wherein the electromagnetic force opposes the actuation force such that the actuation force applied to the blocking member is reduced. A solenoid is an effective actuator which can have a first configuration and a second configuration, and can be designed to provide the required level of actuation force and electromagnetic force, in a compact arrangement.

In some examples the electromagnetic force is greater than the sum of the actuation force and one or more resistive forces. By providing an electromagnetic force which is greater than the actuation force and the resistive forces, the solenoid does not interfere with the pressure relief valve when in the second configuration.

In a second aspect, there is provided an aircraft fluid system comprising the valve assembly of the first aspect.

In some examples the actuator enters the first configuration upon a loss of the electrical power, the loss of electrical power being a result of an electrical failure in the aircraft. In the event of an electrical failure in the aircraft, it may not be possible to provide the valve assembly with electrical power. The first configuration is therefore able to close the pressure relief valve in the event of an electrical failure in the aircraft.

In some examples the aircraft fluid system provides a fluid at a regulated pressure for use in an aircraft nacelle system, an environmental control system, a de-icing system, or an aircraft thrust reverser system. In some examples the pressure relief valve is configured to relieve the pressure of a fluid in a high temperature pressurised system. Such systems may require that the pressure in the fluid is not relieved in the event of an electrical failure, and that the pressure relief valve is closed is such circumstances.

In a third aspect, there is provided an aircraft comprising the aircraft fluid system of the second aspect.

In a fourth aspect there is provided a method of manufacturing a valve assembly for an aircraft fluid system, the method comprising providing a pressure relief valve comprising a blocking member and a pressure relief passage, the blocking member configured to restrict a fluid flow in the pressure relief passage when the pressure relief valve is in a closed configuration, wherein the pressure relief passage is connectable to a fluid passage of the aircraft fluid system to permit pressure relief of the aircraft fluid system when the pressure relief valve is in an open configuration; and coupling the pressure relief valve to an actuator operable in a first configuration and a second configuration; wherein when the actuator is in the first configuration, the actuator is configured to apply an actuation force to the blocking member which forces the pressure relief valve towards the closed configuration; and when the actuator is in the second configuration, the actuation force applied to the blocking member is reduced such that the pressure relief valve is openable to permit pressure relief of the fluid system.

The aircraft fluid system of the second aspect may comprise any of the features of the examples described with respect to the first aspect. The aircraft of the third aspect may comprise any of the features of the examples described with respect to the second aspect. The method of the fourth aspect may include any functional steps described in relation to the examples of the first to third aspects.

### BRIEF DESCRIPTION OF THE DRAWINGS

Various examples will now be described with reference to the accompanying drawings in which:
Fig. 1 shows a schematic representation of an aircraft fluid system.
Fig. 2 shows an embodiment wherein the actuator is in the second configuration.
Fig. 3 shows an embodiment wherein the actuator is in the first configuration.

### DETAILED DESCRIPTION

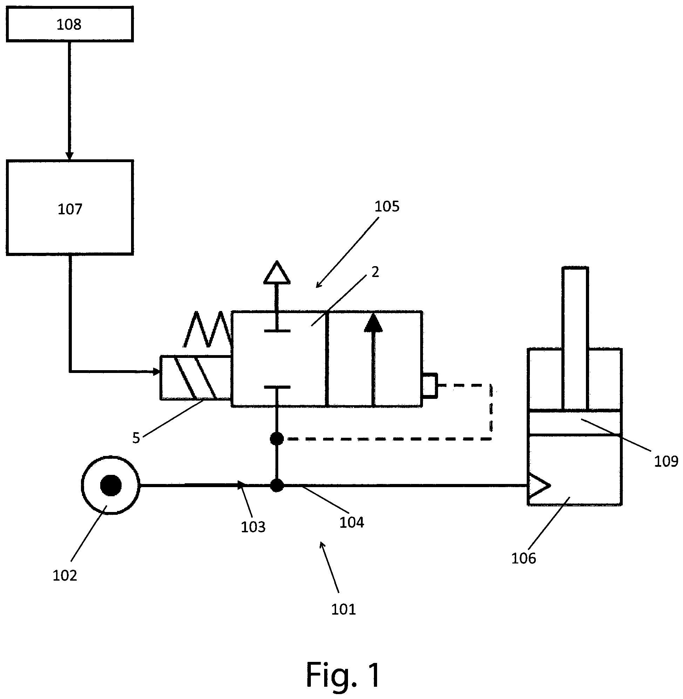

With reference to Fig. 1, an aircraft fluid system 101 includes a fluid supply 102, a fluid passage 104, a valve assembly 105, a pressure regulator 106 and a controller 107. The fluid supply 102 is configured to supply pressurised control fluid 103 into the fluid passage 104.

The valve assembly 105 is connected to the fluid passage 104 to provide pressure relief to the pressurised control fluid 103. The valve assembly 105 includes a pressure relief valve 2 and an actuator 5 (e.g. a solenoid), which is described in more detail below.

The fluid passage 104 is connected to the pressure regulator 106, which is configured to receive pressurised control fluid 103. The pressure regulator 106 may be a piston type pressure regulator comprising a piston 109.

A controller 107 is electrically connected to the valve assembly 105 to provide control signals and/or electrical power to the actuator 5.

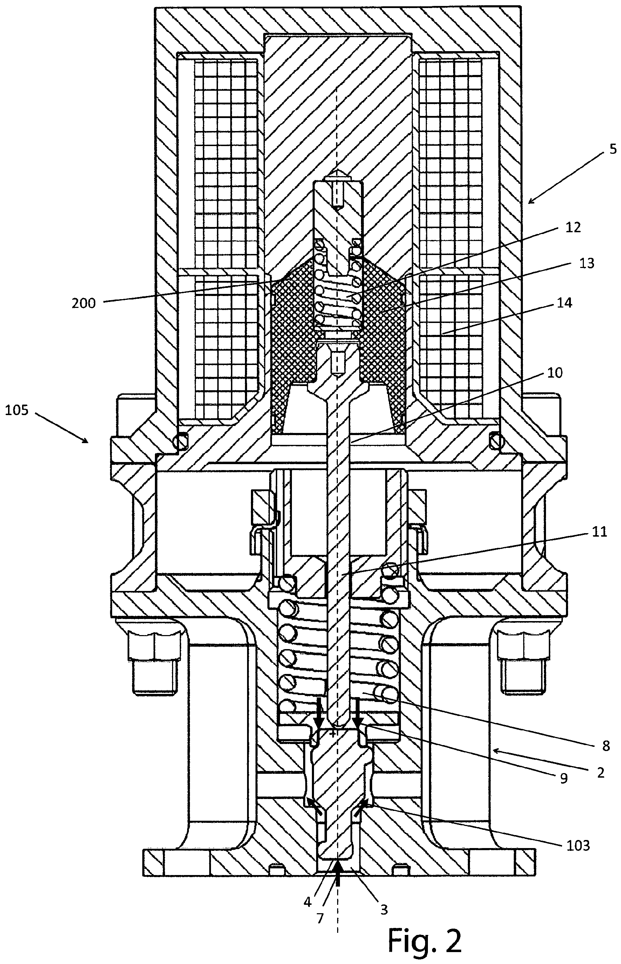

With reference to Fig. 2, the valve assembly 105 includes the pressure relief valve 2 and the actuator 5.

The pressure relieve valve 2 comprises a blocking member 4, a biasing member 8 (e.g. a spring), and a pressure relief passage 3. The biasing member 8 is configured to apply a biasing force 9 to the blocking member 4. The blocking member 4 is configured to be moveable into and out of the pressure relief passage 3. When the pressure relief valve 2 is in the closed position, the blocking member 4 is positioned inside the pressure relief passage 3 to restrict or prevent a fluid flow through the pressure relief passage 3. When the pressure relief valve 2 is in the open position, the blocking member 4 is positioned partially inside or completely outside the pressure relief passage 3 to allow a fluid flow through the pressure relief passage 3.

The pressure relief passage 3 is in fluid communication with the fluid passage 104 of the aircraft fluid system 101.The pressure relief valve 2 is thus configured to receive the pressurised control fluid 103 from the aircraft fluid system 101.

The pressure relief passage 3 has a constrained volume. As such, a pressurised fluid in the pressure relief passage 3 applies a force against the walls of the passage. This force will be transferred to the blocking member 4 as a pressure relief force 7.

The biasing force 9 is applied to an opposite side of the blocking member 4 and in an opposite direction to the pressure relief force 7. As a result, the biasing force 9 and the pressure relief force 7 oppose each other.

The actuator 5 is in this example a solenoid 5. The solenoid 5 includes a spring 12 mechanically fixed to a plunger 13, and a coil 14 electromagnetically coupled to the plunger 13. When the coil 14 is energised a magnetic force is applied to the plunger 13 in a direction opposite to and greater than a force applied by the spring 12. As a result, the plunger 13 moves and the spring 12 becomes compressed. When the coil 14 is de-energised the magnetic force is reduced and the resultant force is substantially the force applied by the compressed spring 12, which moves the plunger 13 away from the spring 12.

The solenoid 5 includes mechanical member 10 which is mechanically fixed to the plunger 13. The mechanical member 10 is dimensioned and positioned to be able to transfer the force exerted by the spring 13 ("actuation force") to the blocking member 4.

The pressure relief valve 2 is mechanically fixed to the solenoid 5. The blocking member 4, the biasing member 8, the mechanical member 10, the plunger 13 and the spring 12 are moveable parts configured to share a central axis 11. The central axis 11 passes through the centre of the pressure relief passage 3. This enables the pressure relief valve 2 and the solenoid actuator 5 to have a compact arrangement.

The controller 107 is configured to supply electrical power to the solenoid 5 to energise the coil 14, and to stop supplying electrical power to the solenoid 5 to de-energise the coil 14. As a result, there is no need for additional signalling between the controller 107 and the solenoid 5 or valve assembly 105. The controller 107 thus controls the solenoid 5 between first and second configurations 100, 200 (as described below) by supplying or stopping the supply of electrical power. The controller 107 is configured to receive a piloting command 108, which may be provided by the aircraft fluid system 101, or any other system from within the aircraft. The piloting command 108 instructs the controller 107 to selectively place the solenoid 5 in the first or second configuration 100, 200.

Fig. 2 shows the solenoid 5 in the second configuration 200. In the second configuration 200 the coil 14 of the solenoid 5 is energised. The spring 12 is compressed. The mechanical member 10 is in a retracted configuration. As a result, in the second configuration 200 the solenoid 5 is configured to not apply a force to the blocking member 4. Thus the blocking member 4 is configured to be movable into and out of the pressure relief passage 3. The pressure relieve valve 2 may thus be in an open configuration (where the blocking member is outside the pressure relief passage 3) or a closed configuration (where the blocking member is inside the pressure relief passage 3 to block the pressure relief passage 3).

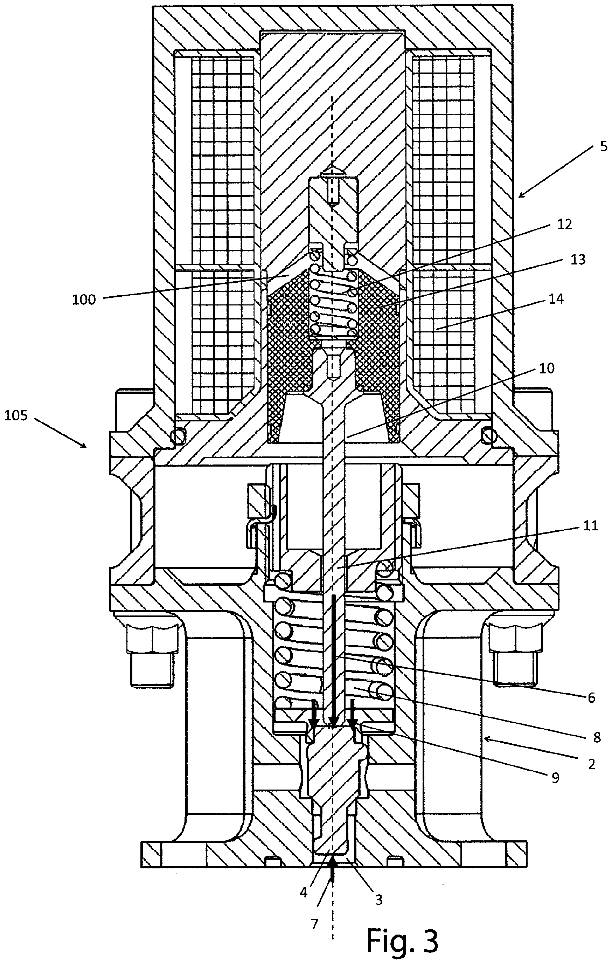

Fig. 3 shows the solenoid 5 in the first configuration 100. In the first configuration 100 the coil 14 of the solenoid 5 is de-energized. The spring 12 is extended. The mechanical member 10 is in an extended configuration. As a result, in the first configuration 100 the solenoid 5 is configured to apply the actuation force 6 to the blocking member 4. Thus the blocking member 4 is positioned inside the pressure relief passage 3 to restrict a fluid flow in the pressure relief passage 3. The pressure relief valve 2 is in a closed configuration.

Referring to Fig.1, the supply 102 supplies a pressurised control fluid 103 (abbreviated to "fluid 103") into a fluid passage 104. The fluid 103 travels through the fluid passage 104 to the pressure regulator 106. The pressure regulator 106 uses the fluid 103 to output system fluid (not shown) at a regulated pressure to one or more aircraft fluid systems (not shown).

In a normal operating condition, the pressure of the fluid 103 fluctuates as a result of fluctuations in the supply 102, as well as changing environmental conditions (e.g. as the aircraft ascends / descends etc.). For the pressure regulator 106 to output fluid at a regulated pressure, the pressure of the fluid 103 must not exceed a pressure threshold. In a situation where the pressure of the fluid 103 becomes greater than the pressure threshold, the pressure relief valve 2 of the valve assembly 105 relieves some of the pressure from the fluid 103 in order to bring the pressure of the fluid 103 below the pressure threshold.

During the normal operating condition, the controller 107 receives the piloting command 108 to place the solenoid into the second configuration 200 as depicted in Fig. 2. The controller supplies electrical power to the solenoid 5 which energises the coil 14. The energised coil 14 provides an electromagnetic force to the plunger 13, which pulls the mechanical member 10 away from the blocking member 4, reducing the actuation force 6 applied to the blocking member 4 and thereby permitting movement of the blocking member 4. The design of the coil 14 is discussed in more detail below. In some examples, the mechanical member 10 remains in contact with the blocking member 4, but the force it applies to the blocking member 4 is reduced in the second configuration, such that it may be overcome by the pressure relief force 7.

When the solenoid 5 is in the second configuration 200, the position of the blocking member 4 is determined by the result of the biasing force 9 applied by the biasing member 8 and the pressure relief force 7. The position of the blocking member 4 within the pressure relief passage 3 determines the amount of fluid 103 which is able to pass through the pressure relief passage 3.

When the pressure of the fluid 103 is below the pressure threshold, the pressure relief force 7 exerted onto the blocking member 4 is lower than the biasing force 9, and the resultant force on the blocking member 4 pushes the blocking member 4 into the pressure relief passage 3. The position of the blocking member 4 in the pressure relief passage 3 closes the pressure relief valve 2, and the pressure relief valve 2 does not allow any of the fluid 103 to travel through the pressure relief passage 3.

As the pressure of the fluid 103 rises (e.g. due to changing conditions of the fluid supply 102), the pressure relief force 7 exerted onto the blocking member 4 increases proportionally to the pressure of the fluid 103. The biasing force 9 remains substantially constant. The resultant force on the blocking member 4 therefore changes proportionally due to the rise in the pressure relief force 7.

As the pressure of the fluid 103 continues to rise, the pressure relief force 7 becomes greater than the biasing force 9, and the direction of the resultant force on the blocking member 4 is reversed. As a result, the blocking member is displaced out of the pressure relief passage 3, the pressure relief valve moves into the open configuration and the fluid 103 is permitted to flow in the pressure relief passage 3. In this manner the pressure relief valve 2 relieves some of the pressure of the fluid 103.

When some of the pressure of the fluid 103 has been relieved, the pressure relief force 7 reduces and the resultant force changes proportionally. When the pressure relief force 7 becomes lower than biasing force 9, the resultant force on the blocking member 4 reverses again and pushes the blocking member 4 back into the pressure relief passage 3, returning the pressure relief valve to the closed configuration.

The rate of pressure relief is proportional to the displacement of the blocking member 4 out of the pressure relief passage 3. The displacement is determined by the resultant force of the pressure relief force 7 and the biasing force 9 applied by the biasing member 8. The biasing member 8 can thus be sized and tuned to provide a suitable level of pressure relief in accordance with the requirements of aircraft fluid system 102 (e.g. by defining the pressure threshold). As such, the pressure relief valve 2 is configurable to an open or closed configuration which is suited to providing pressure relief to the aircraft fluid system 102.

Accordingly, when the solenoid 5 is in the second configuration 200 as depicted in Fig. 2, the pressure relief valve 2 may operate without the actuator 5 interfering with the operation of the pressure relief valve 2.

In a first event, the piloting command 108 changes to instruct the controller 107 to transition the solenoid 5 into the first configuration 100 as depicted in Fig. 3. In the first configuration 100, the pressure relief valve 2 is in the closed configuration, as will be described in detail below.

A piloting command 108 to this effect is useful in a scenario where, for example, it is desired for the pressure relief valve 2 to stop providing pressure relief to the fluid 103. The piloting command 108 is provided electronically by an aircraft system.

In a second event, there may be an electrical failure in the aircraft or aircraft fluid system 101 which prevents the controller 107 from supplying electrical power to the solenoid 5. The solenoid 5 therefore enters the first configuration 100 as a result of the electrical failure.

Thus, the solenoid may enter the first configuration 100 through either the first or second event.

In the first configuration 100 depicted in Fig. 3, there is no electrical power provided to the coil 14 and thus there is no electromagnetic force provided by the coil 14 . The spring 12 is in an expanded configuration and provides the actuation force 6 which pushes the plunger 13 and mechanical member 10 towards the blocking member 4. This results in the mechanical member 10 applying the actuation force 6 to the blocking member 4.

The spring 12 is designed and tuned such that the actuation force 6 is 5% greater than a maximum pressure relief force minus the biasing force 9. The maximum pressure relief force is the pressure relief force 7 in an event when the pressure in the pressure relief passage 3 is a maximum. In some examples the maximum pressure relief force is determined through experimentation of a worst-case scenario. In some examples the maximum pressure relief force is determined through simulation. Because the biasing force 9 acts in the same direction as the actuation force 6, the actuation force 6 does not need to overcome all of the maximum pressure relief force. Thus, taking the biasing force 9 into account when designing the spring 12 ensures that the spring 12 is not oversized, and is as small and lightweight as possible, which is particularly advantageous in aircraft applications.

The specification of the coil 14 is designed and tuned in accordance with the requirements of the spring 12. Specifically, the coil 14 is designed and tuned to ensure that the electromagnetic force provided by the coil 14 is greater than the sum of the actuation force 6 and one or more resistive forces. In some examples the resistive force is a frictional force produced from the movement of parts within the solenoid 5. In some examples the resistive force is a vibration force produced as a result of the operating conditions of the solenoid 5 and the environment (for example, vibrations from the engine or movement of the aircraft). By providing an electromagnetic force which is greater than the actuation force 6 and the resistive forces, the solenoid 5 does not interfere with the pressure relief valve 2 when in the second configuration 200.

The resultant force on the blocking member 4 is thus substantially provided by the actuation force 6. The resultant force causes the blocking member 4 to move into the pressure relief passage 3 and prevent the flow of the fluid 103 through the pressure relief passage 3. As a result, the pressure relief valve 2 is closed.

In an event where the pressure of the fluid 103 increases which causes the pressure relief force 7 to increase, the resultant force on the blocking member 4 changes proportionally to the increase in the pressure relief force 7. However, because the actuation force 6 is greater than the maximum pressure relief force minus the biasing force 9, even in a maximum pressure condition, the resultant force on the blocking member 4 pushes the blocking member 4 into the pressure relief passage 3 and prevents the pressure relief valve 2 from opening. Accordingly, when the solenoid 5 is in the first configuration 100, the pressure relief valve 2 remains in the closed configuration and is prevented from providing pressure relief to the aircraft fluid system 101. The pressure relief valve 2 is thus isolated from the aircraft fluid system 101 in the first configuration 100.

As such, in the event that the solenoid 5 enters the first configuration 100 as a result of a loss of electrical power (e.g. the second event as described above), the pressure relief valve 2 remains in a closed configuration. This is advantageous in a scenario where, for example, the valve assembly 105 is part of a de-icing system and it is desired that the pressure relief valve 2 is isolated from the fluid system in the event of an electrical failure to enable continued operation of the de-icing system. It may be a safety requirement for the fluid 103 of the aircraft fluid system 101 to remain unvented in the event of an electrical failure, in order to continue the safe provision of services.

Additionally, as described above, the valve assembly 105 may enter the first configuration 100 as a result of a piloting command. Accordingly the present invention provides the functionality of isolating the pressure relief valve 2 from the aircraft fluid system 101 with a valve assembly 105 that advantageously has a minimum number of parts and is therefore lightweight. The simple design of the valve assembly 105 enables it to be a single Line-Replaceable Unit (LRU), which in turn facilitates easier servicing or replacement of the valve assembly. Furthermore, because only one pressure relief passage is used, a minimum number of seals is used which improves reliability of the valve assembly 105.

In the present example, a solenoid 5 is used as an actuator. However, other actuators may also be suitable in place of the solenoid (e.g. a spring loaded servo motor, a spring loaded hydraulic actuator etc.).

Various aspects of the apparatus disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A valve assembly for an aircraft fluid system, the valve assembly comprising:
a pressure relief valve comprising a blocking member and a pressure relief passage, the blocking member configured to restrict a fluid flow in the pressure relief passage when the pressure relief valve is in a closed configuration, wherein the pressure relief passage is connectable to a fluid passage of the aircraft fluid system to permit pressure relief of the aircraft fluid system when the pressure relief valve is in an open configuration; and
an actuator operable in a first configuration and a second configuration;
wherein when the actuator is in the first configuration, the actuator is configured to apply an actuation force to the blocking member which forces the pressure relief valve towards the closed configuration; and
when the actuator is in the second configuration, the actuation force applied to the blocking member is reduced such that the pressure relief valve is openable to permit pressure relief of the fluid system.

2. The valve assembly according to claim 1, wherein the blocking member is configured to receive a pressure relief force from fluid in the pressure relief passage, the pressure relief force acting against the actuation force.

3. The valve assembly according to claim 2, wherein the pressure relief valve further comprises a biasing member which is configured to apply a biasing force to the blocking member, the biasing force in the same direction as the actuation force.

4. The valve assembly according to claim 3, wherein when the actuator is in the second configuration the actuation force is reduced such that the position of the blocking member is determined substantially by the result of the biasing force and the pressure relief force.

5. The valve assembly according to claim 3, wherein the actuation force is greater than a maximum pressure relief force minus the biasing force.

6. The valve assembly according to any preceding claim, wherein the actuator is in the first configuration when the actuator is not supplied with electrical power.

7. The valve assembly according to any preceding claim and comprising a controller configured to control the actuator to be in the first configuration or the second configuration.

8. The valve assembly according to any preceding claim, wherein the actuator includes a mechanical member, and the mechanical member is in an extended configuration to apply the actuation force to the blocking member when the actuator is in the first configuration, and the mechanical member is in a retracted configuration when the actuator is in the second configuration.

9. The valve assembly according to any preceding claim, wherein the actuator is aligned with the blocking member on a common axis.

10. The valve assembly according to any preceding claim, wherein the actuator is a solenoid, wherein the solenoid includes one or more coils configured to provide an electromagnetic force when the solenoid is in the second configuration, wherein the electromagnetic force opposes the actuation force such that the actuation force applied to the blocking member is reduced.

11. An aircraft fluid system comprising a valve assembly according to any preceding claim.

12. The aircraft fluid system according to claim 11, wherein the actuator enters the first configuration upon a loss of the electrical power, the loss of electrical power being a result of an electrical failure in the aircraft.

13. The aircraft fluid system according to claim 11 or 12, wherein the aircraft fluid system provides a fluid at a regulated pressure for use in an aircraft nacelle system, an environmental control system, a de-icing system, or an aircraft thrust reverser system.

14. An aircraft comprising the aircraft fluid system according to claims 11-13.

15. A method of manufacturing a valve assembly for an aircraft fluid system, the method comprising:
providing a pressure relief valve comprising a blocking member and a pressure relief passage, the blocking member configured to restrict a fluid flow in the pressure relief passage when the pressure relief valve is in a closed configuration, wherein the pressure relief passage is connectable to a fluid passage of the aircraft fluid system to permit pressure relief of the aircraft fluid system when the pressure relief valve is in an open configuration; and
coupling the pressure relief valve to an actuator operable in a first configuration and a second configuration;
wherein when the actuator is in the first configuration, the actuator is configured to apply an actuation force to the blocking member which forces the pressure relief valve towards the closed configuration; and
when the actuator is in the second configuration, the actuation force applied to the blocking member is reduced such that the pressure relief valve is openable to permit pressure relief of the fluid system.
